## Europäisches Patentamt

## European Patent Office

## Office européen des brevets

(19)

(11) Veröffentlichungsnummer: **0 070 434**
**B1**

(12) # EUROPÄISCHE PATENTSCHRIFT

(45) Veröffentlichungstag der Patentschrift:
**19.06.85**

(51) Int. Cl.⁴: **F 21 V 21/28, F 16 M 11/12**

(21) Anmeldenummer: **82105887.2**

(22) Anmeldetag: **01.07.82**

(54) **Höhenverstellbarer Parallelogrammtragarm.**

(30) Priorität: **17.07.81 DE 8121076 U**
**17.07.81 DE 8121048 U**

(43) Veröffentlichungstag der Anmeldung:
**26.01.83 Patentblatt 83/4**

(45) Bekanntmachung des Hinweises auf die Patenterteilung:
**19.06.85 Patentblatt 85/25**

(84) Benannte Vertragsstaaten:
**DE FR GB IT**

(56) Entgegenhaltungen:
**DE - B - 1 012 571**
**DE - C - 838 732**
**GB - A - 732 984**
**GB - A - 968 525**
**US - A - 1 930 993**
**US - A - 2 287 577**
**US - A - 2 911 525**
**US - A - 2 941 776**

(73) Patentinhaber: **Siemens Aktiengesellschaft, Berlin und München Wittelsbacherplatz 2, D-8000 München 2 (DE)**

(72) Erfinder: **Günther, Werner, Odenwaldstrasse 20, D-6140 Bensheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen höhenverstellbaren Parallelogrammtragarm mit einem ortsfesten ersten Gelenkkopf und einem demgegenüber im Rahmen einer Höhenverstellung beweglichen zweiten Gelenkkopf, mit einem zwischen den Gelenkköpfen angeordneten rohrförmigen ersten Parallelogrammschenkel und einem in diesem geführten stangenförmigen zweiten Parallelogrammschenkel sowie einer am zweiten Gelenkkopf befestigten Tragstange, an deren freiem Ende ampelartig ein Gerät gehaltert ist.

Bei bekannten Tragarmkonstruktionen dieser Art (US-A-2 941 776) ist die Gelenkstelle im Bereich der Gelenkköpfe in üblicher Weise als offenes Gabelgelenk ausgebildet, wodurch zwischen den Enden des äußeren, rohrförmigen Parallelogrammschenkels und der sich daran angelenkten Tragstange für das zu halternde Gerät zwangsläufig Spalte ergeben, die insbesondere bei Parallelogrammtragarmen, die im medizinischen Bereich eingesetzt werden, aus hygienischen Gründen unerwünscht sind, weil man dort einerseits das Ansammeln bzw. Eindringen von Schmutz an den bei einer Höhenverstellung des Tragarmes relativ zueinander zu bewegenden und von außen sichtbaren Teilen vermeiden und andererseits eine möglichst leicht zu reinigende Oberfläche haben möchte.

Erfindungsgemäß wird ein höhenverstellbarer Parallelogrammtragarm der eingangs genannten Gattung vorgeschlagen, bei dem die bogenförmig ausgebildete und mit ihrem freien Ende in einer Buchse mit vertikaler Achslagerung schwenkbar gehalterte Tragstange und der trägerseitige Gelenkkopf von einer einerseits am rohrförmigen Parallelogrammschenkel und andererseits an der Halterung der Tragstange in der Buchse befestigten flexiblen Umhüllung umgeben sind, deren Außenabmessung im wesentlichen dem rohrförmigen Parallelogrammschenkel entspricht und deren Innenabmessung (lichte Weite) so bemessen ist, daß sich der Gelenkkopf mit der Tragstange innerhalb des Verstellbereiches des Tragarmes frei bewegen kann.

Als Umhüllung kann im einfachsten Falle ein Gummi- oder Kunststoffschlauch verwendet werden; besonders vorteilhaft sind jedoch Schläuche, die sich sehr stark biegen lassen, ohne daß sich ihr (Querschnitts-)Profil dabei wesentlich ändert, wie z. B. Spiralschläuche oder Metallschutzschläuche. Mit solchen Umhüllungen läßt sich auch ein kontinuierlicher Übergang von Tragarm zu Gerät in allen Neigungslagen erzielen.

Eine vorteilhafte Anwendung des Parallelogrammtragarmes wird im Bereich der zahnärztlichen Technik, insbesondere in der Halterung einer mittels Transformator mit Niederspannung betriebenen zahnärztlichen Leuchte, gesehen. Der Gewichtsausgleich erfolgt vorteilhafterweise durch Ausbalancierung mittels eines Gegengewichts, wobei der Transformator selbst als Gegengewicht dient und in einem Gehäuse am einen Ende des verstellbaren Teils der Tragarmkonstruktion angeordnet ist. Innerhalb des Gehäuses können vorteilhafterweise, in Längsrichtung des Tragarmes gesehen, mehrere Befestigungspunkte für den Transformator vorgesehen sein. Vorteilhaft kann es auch sein, im Gehäuse eine Halterung für zusätzliche Gewichte vorzusehen. Hierzu kann eine in Längsrichtung des Tragarmes angeordnete Gewindestange vorhanden sein, auf der ein oder mehrere Gewichte aufgeschraubt oder durch Verschraubung gehaltert sind. Im Gehäuse kann gemäß einer weiteren vorteilhaften Ausgestaltung der Erfindung ein Schalter dergestalt angeordnet sein, daß er von einem bei Höhenverstellung eine Relativbewegung ausführenden Gestänge betätigt wird.

Ein Ausführungsbeispiel der Erfindung wird nachfolgend anhand der Zeichnung näher erläutert. Es zeigt

Fig. 1 eine zahnärztliche Beleuchtungseinrichtung mit dem erfindungsgemäßen Parallelogrammarm,

Fig. 2A und 2B den Aufbau des Parallelogrammarmes,

Fig. 3 eine Detaildarstellung aus Fig. 2B.

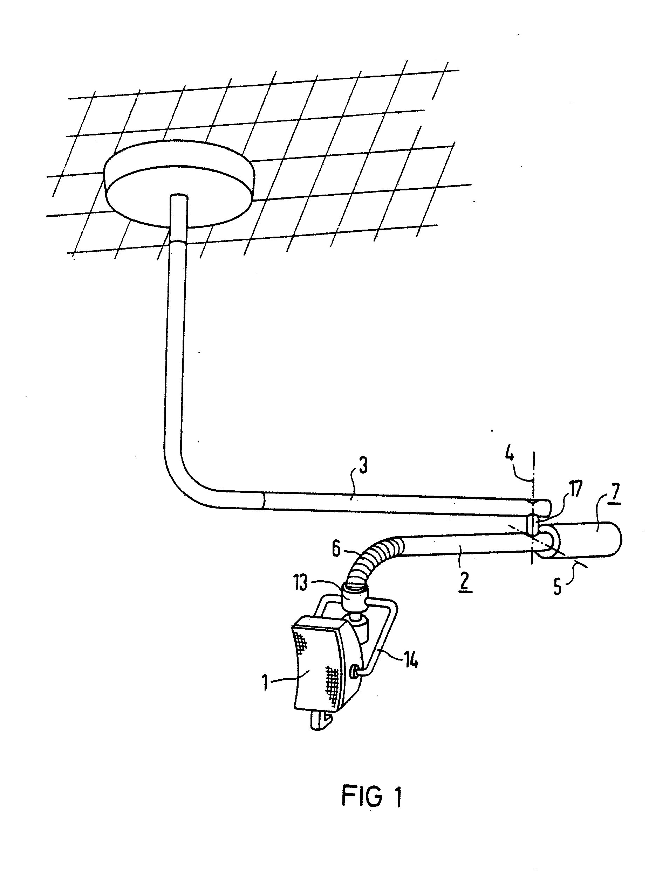

Die Fig. 1 zeigt in einer schaubildlichen Darstellung eine zahnärztliche Beleuchtungseinrichtung, bestehend aus einer Leuchte 1, die mittels eines Parallelogrammtragarms 2 an einer Deckenaufhängung 3 um eine vertikale Achse 4 drehbar und um eine horizontale Schwenklagerung 5 neigbar und damit in ihrer Höhe verstellbar gehalten ist. Der Parallelogrammtragarm 2 ist im Bereich der Leuchtenaufhängung durch eine mit 6 bezeichnete flexible Umhüllung von außen her gesehen völlig geschlossen, d. h. die bei einer Höhenverstellung, bedingt durch das Parallelogrammsystem, sich gegeneinander verschiebenden Teile liegen alle innerhalb der Umhüllung und können deshalb keine von außen sichtbaren Spalte od. dgl. bilden.

Zur Gewichtskompensation der Leuchte 1 ist an dem der Leuchte abgewandten Ende des Tragarmes 2 ein Gegengewicht 7 angeordnet.

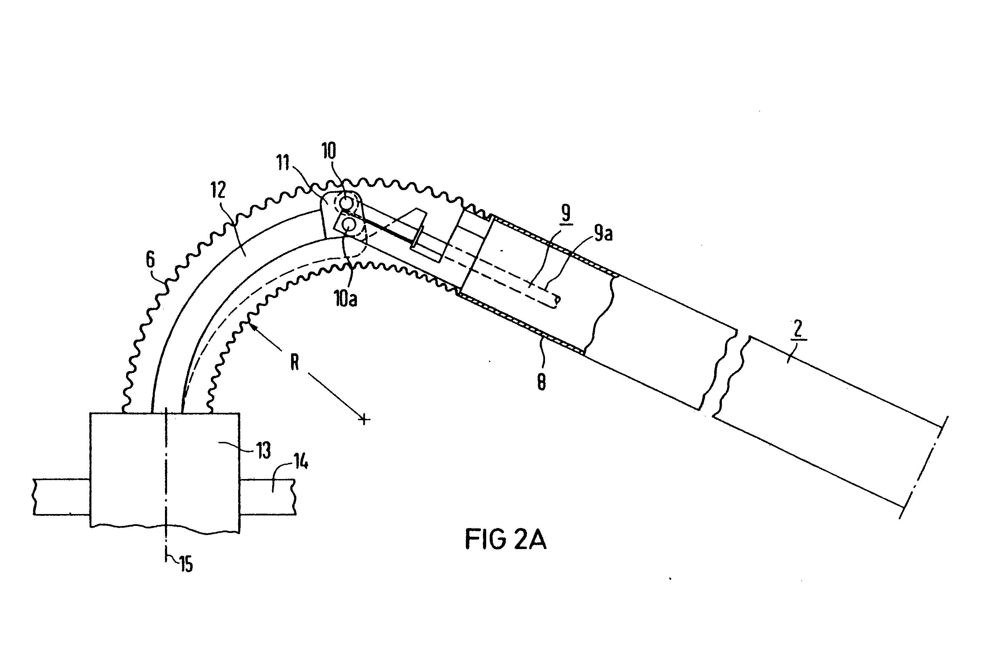

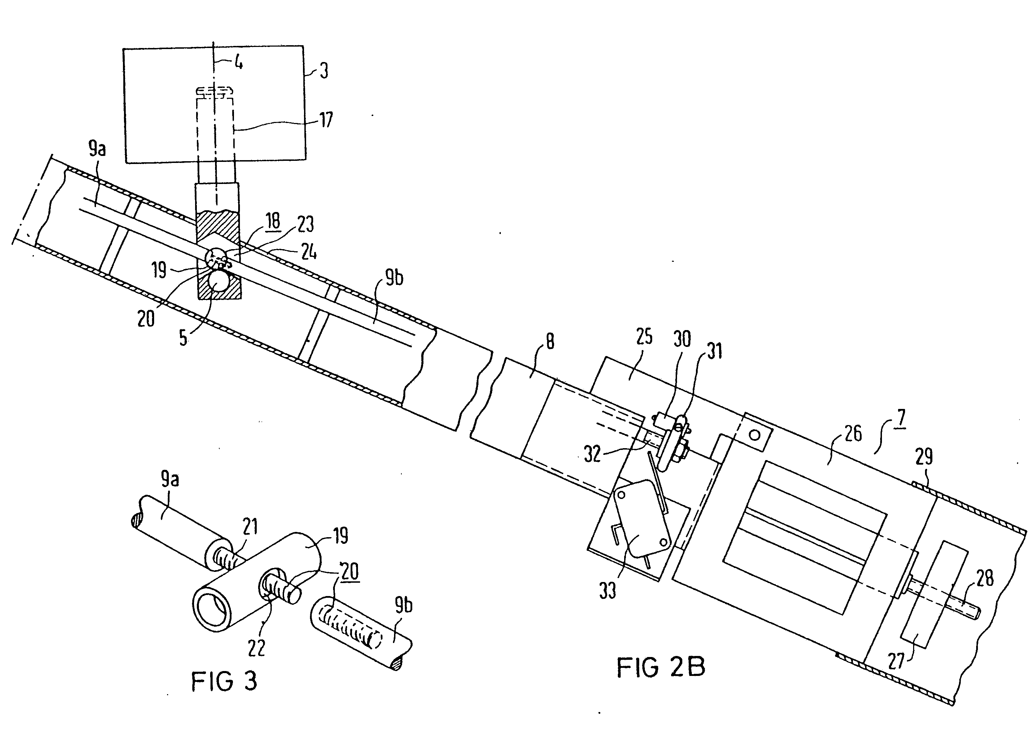

Anhand der Fig. 2A und 2B wird der Aufbau des Parallelogrammtragarmes 2 näher erläutert. Zu diesem Zweck ist der Tragarm teilweise im Längsschnitt dargestellt.

Der Parallelogrammtragarm 2 enthält einen rohrförmigen (Vierkant- oder Rundrohr) ersten Parallelogrammschenkel 8 und einen in diesem geführten stangenförmigen zweiten Parallelogrammschenkel 9. Die beiden Parallelogrammschenkel 8, 9 sind mittels Achslagerungen 10, 10a in einem trägerseitigen Gelenkkopf 11 gelagert, an dem eine bogenförmig geformte, in sich starre Tragstange 12 befestigt ist, an deren freiem Ende eine Buchse 13 drehbar gelagert ist, an der ein die Leuchte 1 tragender Bügel 14 befestigt ist, und zwar so, daß die Leuchte um eine mit 15 bezeichnete Vertikalachse gedreht werden kann.

Die flexible Umhüllung 6, vorteilhafterweise ein Spiral- oder Wellschlauch, umgibt Tragstange 12, Gelenkkopf 11 mit den Lagern 10, 10a sowie Teile der beiden Parallelogrammschenkel 8 und 9 und ist einerseits in dem rohrförmigen Parallelogrammschenkel und andererseits in der Buchse 13 befestigt; mit letzterer so, daß die Drehbarkeit der Hülse 13 gegenüber dem Tragrohr 12 und der Umhüllung 6 gegeben ist. Die Umhüllung 6 entspricht im Außendurchmesser dem des Parallelogrammschenkels 8; ihre lichte Weite (Innendurchmesser) ist so bemessen, daß sich der Gelenkkopf 11 mit der Tragstange 12 innerhalb des Verstellweges des Tragarmes 2 frei bewegen kann. Der Gelenkkopf 11 liegt also in der gezeichneten obersten Stellung mit seiner Oberkante nahe an der oberen und in der untersten Stellung des Tragarmes mit seiner Unterkante nahe an der unteren Innenfläche (siehe gestrichelte Linien) der Umhüllung. Infolge der Flexibilität der Umhüllung folgt dies den bei einer Höhenverstellung sich ändernden Bogen (R) ohne Änderung des (Querschnitts-)Profils.

An der Deckenaufhängung 3 ist ein Zapfen 17 um die Achse 4 drehbar gehalten. Dieser Zapfen 17 nimmt die beiden, gegenüber den ortsbeweglichen Achslagerungen 10, 10a ortsfesten Achslagerungen 5, 18 des Parallelogrammtragarmes auf. Die untere Achslagerung ist gebildet durch das Schwenklager 5 (Fig. 1) und bildet somit den festen Drehpunkt, um den der Tragarm bei einer Höhenverstellung schwenkt. Der Lagerzapfen dieses Lagers wird vom Parallelogrammschenkel 8 aufgenommen. Die obere Achslagerung 18 wird durch eine im Zapfen 17 drehbar gelagerte Buchse 19 gebildet.

Die Stange 9 ist in zwei Abschnitte 9a, 9b unterteilt, die durch eine Verschraubung 20 miteinander verbunden sind. Der eine Abschnitt (9a) enthält einen Gewindezapfen 21, welcher (siehe Detaildarstellung in Fig. 3) durch eine Querbohrung 22 in der Buchse 19 ragt und diese so durch die beiden miteinander verschraubten Stangenabschnitte 9a, 9b verspannt. Damit die Stange 9 die beim Schwenken des Tragarmes sich zwangsläufig ergebenden Relativbewegungen ungehindert ausführen kann, ist der Zapfen 17 mit einer entsprechenden Ausnehmung 23 versehen. Ebenso ist auch der rohrförmige erste Parallelogrammschenkel 8 mit einer entsprechenden Ausnehmung 24 versehen.

Als Gewichtsausgleich für die Leuchte 1 ist eine Gegengewichtsanordnung 7 vorgesehen, welche im wesentlichen einen in einem am rohrförmigen Parallelogrammschenkel 8 befestigten Gehäuse 25 darin angeordneten Transformator 26 zur Anpassung der Lampenspannung (12-V-Niedervoltlampe) der Leuchte 1 an die übliche Netzspannung (220 V) enthält. Der Transformator 26 kann innerhalb des Gehäuses 25 in Richtung der Längsachse des Tragarmes gesehen an verschiedenen Stellen gehalten werden, wodurch eine Anpassung an unterschiedlich hohe Leuchtengewichte erreicht werden kann. Bei fester Anordnung des Trafos ist vorteilhafterweise ein zusätzliches Gewicht 27 vorzusehen, welches zur Anpassung an unterschiedlich hohe Lampengewichte auf einer Gewindestange 28 verstellbar gehaltert ist. Auf die gesamte Anordnung ist eine mit 29 angedeutete Kappe aufschiebbar.

Die Schwergängigkeit des Tragarmes ist durch einen Reibklotz 30 festgelegt, der auf einem Teil 31 befestigt ist und gegen eine Fläche des Gehäuses 25 drückt. Zur besseren Führung kann im Gehäuse 25 eine Nut angeordnet sein, durch die ein am Teil 31 befestigter Führungsbolzen greift. Zur Verstärkung der Reibkraft kann ferner nicht nur an der Innen-, sondern auch an der Außenfläche des Gehäuses 25 ein Reibklotz angeordnet sein. Zur Halterung des Teils 31 ist der vom Zapfen 17 in das Gehäuse 25 einmündende Stangenabschnitt 9b an seinem gehäuseseitigen Ende mit einem Gewinde 32 versehen. Das Teil 31 dient als Betätigungselement für einen im Gehäuse befestigten Schalter 33. Der Schalter ist dabei so angeordnet, daß er in der gezeigten oberen Nichtgebrauchsstellung nicht betätigt ist, wodurch die Lampe abgeschaltet ist, dagegen bei einem Nachuntenschwenken infolge der Relativbewegung zwischen Stange 9 und Rohr 8 über das Teil 31 betätigt wird, wodurch die Lampe eingeschaltet wird.

## Patentansprüche

1. Höhenverstellbarer Parallelogrammtragarm mit einem ortsfesten ersten Gelenkkopf (17) und einem demgegenüber im Rahmen einer Höhenverstellung beweglichen zweiten Gelenkkopf (11), mit einem zwischen den Gelenkköpfen (17, 11) angeordneten rohrförmigen ersten Parallelogrammschenkel (8) und einem in diesem geführten stangenförmigen zweiten Parallelogrammschenkel (9) sowie mit einer am zweiten Gelenkkopf (11) befestigten Tragstange (12), an deren freiem Ende ampelartig ein Gerät (1) gehalten ist, dadurch gekennzeichnet, daß die bogenförmig ausgebildete und mit ihrem freien Ende in einer Buchse (13) mit vertikaler Achslagerung schwenkbar gehaltene Tragstange (12) und der trägerseitige Gelenkkopf (11) von einer einerseits am rohrförmigen Parallelogrammschenkel (8) und andererseits an der Halterung der Tragstange (12) in der Buchse (13) befestigten flexiblen Umhüllung (6) umgeben sind, deren Außenabmessung (Durchmesser) im wesentlichen dem rohrförmigen Parallelogrammschenkel entspricht und deren Innenabmessung (lichte Weite) so bemessen ist, daß sich der Gelenkkopf (11) mit der Tragstange (12) innerhalb des Verstellbereiches des Tragarmes (2) frei bewegen kann.

2. Tragarm nach Anspruch 1, dadurch gekennzeichnet, daß die flexible Umhüllung (6) ein bei Biegung konstant bleibendes (Querschnitts-)Profil aufweist.

3. Tragarm nach Anspruch 1, dadurch gekennzeichnet, daß als Umhüllung ein Spiralschlauch (6) vorgesehen ist.

4. Tragarm nach einem der Ansprüche 1 bis 3, dadurch gekennzeichnet, daß an seinem freien Ende eine mittels Transformator (26) mit Niederspannung betriebene zahnärztliche Leuchte (1) gehaltert ist und der Transformator (26) zum Zwecke eines Gewichtsausgleichs an dem der Leuchte abgewandten Ende als Gegengewicht (7) dient, wozu dieser in einem an dem der Leuchte (1) abgewandten Ende angeordneten Gehäuse (25) angeordnet ist.

5. Tragarm nach Anspruch 4, dadurch gekennzeichnet, daß innerhalb des Gehäuses (25), in Längsrichtung des Tragarmes (2) gesehen, mehrere Befestigungspunkte für den Transformator (26) vorgesehen sind, wodurch dieser mit unterschiedlichem Hebelarm zum Drehpunkt (5) des Tragarmes befestigbar ist.

6. Tragarm nach Anspruch 4, dadurch gekennzeichnet, daß im Gehäuse (25) eine Halterung (28) für zusätzliche Gewichte (27) vorgesehen ist.

7. Tragarm nach Anspruch 6, dadurch gekennzeichnet, daß eine in Längsrichtung des Tragarmes angeordnete Gewindestange (28) vorhanden ist, auf der ein oder mehrere Gewichte (27) aufgeschraubt oder durch Verschraubung gehaltert sind.

8. Tragarm nach einem der Ansprüche 4 bis 7, dadurch gekennzeichnet, daß in dem Gehäuse (25) ein Schalter (33) angeordnet ist, der von einem bei einem Schwenken des Tragarmes eine Relativbewegung ausführenden Gestängeteil (31) betätigt wird.

## Claims

1. A supporting arm adjustable for height, involving a parallelogram coupling, having a stationary first cardan joint (17) and a second cardan joint (11) movable in relation thereto during height adjustment, a tubular first parallelogram leg (8) disposed between the cardan joints (17, 11) and a rod-shaped second parallelogram leg (9) guided therein, and a supporting rod (12) which is fixed to the second cardan joint (11) and has a device (1) suspended from its free end, characterised in that the curved supporting rod (12) pivotably mounted at its free end in a bush (13) with a vertical pivot mounting, and the cardan joint (11) at the support end, are enclosed in a flexible covering (6) fixed to the tubular parallelogram leg (8) at one end and to the mounting of the supporting rod (12) in the bush (13) at the other end, and whose external dimension (diameter) is essentially the same as that of the tubular parallelogram leg and the internal dimension (clear passage) of which is such that the cardan joint (11) with the supporting rod (12) can move freely within the range of adjustment of the supporting arm (2).

2. A supporting arm as claimed in Claim 1, characterised in that the flexible covering (6) has a constant (cross-sectional) profile on bending.

3. A supporting arm as claimed in Claim 2, characterised in that a spiral tube (6) is provided as the covering.

4. A supporting arm as claimed in one of Claims 1 to 3, characterised in that a dental light (1), operated on low voltage by means of a transformer (26), is mounted at its free end; and that the transformer (26) serves as a counterweight (7) to balance the weight at the end remote from the light and is disposed in a housing (25) located at the end remote from the light (1).

5. A supporting arm as claimed in Claim 4, characterised in that, inside the housing (25), viewed in the longitudinal direction of the supporting arm (2), a plurality of fixing points are provided for the transformer (26), by which the latter can be fixed for varying leverage relative to the fulcrum (5) of the supporting arm.

6. A supporting arm as claimed in Claim 4, characterised in that a mounting (28) is provided in the housing (25) for additional weights (27).

7. A supporting arm as claimed in Claim 6, characterised in that a threaded rod (28), on which one or more weights (27) are screwed or held by threaded means, is arranged in the longitudinal direction of the supporting arm.

8. A supporting arm as claimed in one of Claims 4 to 7, characterised in that a switch (33) operated by a linkage part (31) executing a relative movement when the supporting arm is pivoted, is disposed in the housing (25).

## Revendications

1. Bras de support, en forme de parallélogramme, réglable en hauteur, comprenant une première tête d'articulation (17) fixe et une seconde tête d'articulation (11) mobile par rapport à la précédente dans le cadre d'un réglage en hauteur, une première branche tubulaire de parallélogramme (8) disposée entre les têtes d'articulation et une seconde branche de parallélogramme (9), en forme de barre, guidée dans la première branche, ainsi qu'une barre-support (12), qui est fixée à la seconde tête d'articulation (11) et à l'extrémité libre de laquelle un appareil (1) est monté à la manière d'une lampe suspendue, caractérisé en ce que la barre-support (12), qui a une forme arquée et qui, par son extrémité libre, est montée bas-culante, par des paliers d'axe verticaux, dans une douille (13), et la tête d'articulation (11), située du côté du support, sont entourées d'une enveloppe (6) souple, fixée d'une part à la branche tubulaire du parallélogramme (8) et d'autre part aux paliers de la barre support (12) dans la douille (13) et dont la dimension extérieure (diamètre) correspond sensiblement à celle de la branche tubulaire de parallélogramme et dont la dimension inférieure (diamètre intérieur) est telle que la tête d'articulation (11) avec la barre support (12) peut se déplacer librement dans la plage de réglage du bras de support (2).

2. Bras de support suivant la revendication 1, caractérisé en ce que l'enveloppe (6) souple présente un profil (de section transversale) restant constant lors de la courbure.

3. Bras de support suivant la revendication 2, caractérisé en ce qu'il est prévu comme enveloppe un tuyau spiralé (6).

4. Bras de support suivant l'une des revendications 1 à 3, caractérisé en ce que, sur son extrémité libre, est montée une lampe de dentisterie fonctionnant à basse tension au moyen d'un transformateur (26), et le transformateur (26) sert de contrepoids (7) en vue d'un équilibrage de poids sur l'extrémité éloignée de la lampe, le transformateur étant disposé, à cet effet, dans un boîtier (25) disposé à l'extrémité éloignée de la lampe (1).

5. Bras de support suivant la revendication 4, caractérisé en ce que, dans le boîtier (25), sont prévus, considérés suivant la direction longitudinale du bras de support (2), plusieurs points de fixation pour le transformateur (26), celui-ci pouvant être fixé avec un bras de levier différent au point d'articulation (5) du bras de support.

6. Bras de support suivant la revendication 4, caractérisé en ce qu'il est prévu, dans le boîtier (25), une fixation (28) pour des masselottes (27) supplémentaires.

7. Bras de support suivant la revendication 6, caractérisé en ce qu'il est prévu une tige filetée (28) disposée suivant la direction longitudinale du bras de support et sur laquelle sont vissées ou sont montées par vissage une ou plusieurs masselottes (27).

8. Bras de support suivant l'une des revendications 4 à 7, caractérisé en ce que, dans le boîtier (25) est disposé un interrupteur (33) qui est manœuvré par une partie de tringlerie (31) effectuant un mouvement relatif lors d'un basculement du bras de support.

FIG 1

FIG 2A

FIG 3

FIG 2B

0 070 434